(19) Europäisches Patentamt
European Patent Office
Office européen des brevets

(11) Publication number: **0 116 779 B1**

(12) **EUROPEAN PATENT SPECIFICATION**

(45) Date of publication of patent specification: **14.01.87**

(51) Int. Cl.⁴: **C 08 F 220/56,** E 21 B 43/22 // (C08F220/56, 220:28)

(21) Application number: **83307853.8**

(22) Date of filing: **22.12.83**

(54) **A process for the formation of novel acrylamide acrylate copolymers.**

(30) Priority: **29.12.82 US 454285**
**29.12.82 US 454286**
**29.12.82 US 454468**

(43) Date of publication of application:
**29.08.84 Bulletin 84/35**

(45) Publication of the grant of the patent:
**14.01.87 Bulletin 87/03**

(84) Designated Contracting States:
**BE DE FR GB IT NL**

(56) References cited:
**DE-B-1 110 422**
**US-A-3 334 072**
**US-A-3 963 684**

(73) Proprietor: **Exxon Research and Engineering Company**
**P.O.Box 390 180 Park Avenue**
**Florham Park New Jersey 07932 (US)**

(72) Inventor: **Schulz, Donald N.**
**R.D. 2 Box 58**
**Annandale New Jersey 08801 (US)**
Inventor: **Maurer, John J.**
**9 Crane Circle**
**New Providence New Jersey 07974 (US)**
Inventor: **Bock, Jan**
**500 Juniper Lane**
**Bridgewater New Jersey 08807 (US)**
Inventor: **Kowalik, Ralph M.**
**880 Country Club Road**
**Bridgewater New Jersey 08807 (US)**

(74) Representative: **Pitkin, Robert Wilfred et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention concerns copolymers of acrylamide and nonionic surfactant monomers.

German Auslegeschrift 1110422 relates to a process for the preparation of polymers of acrylamide and N-tertbutyl acrylamide in a weight ratio of 4:6 to 7:3. US 3963684 concerns the preparation of copolymers of acrylamide and 1 to 5 mole percent of a vinyl benzyl ether of the formula:

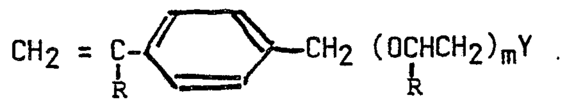

where R is H or Me, m is 10 to 100 and $R_1$ is a $C_{10}$ to $C_{22}$ alkyl, alkaryl or aralkyl group.

The compositions of the invention are distinguished from nonionic polyacrylamide homopolymers by their higher solution rheological behaviour, e.g. viscosification efficiences. They are different from hydrolyzed polyacrylamide, a copolymer of acrylic acid and acrylamide, by virtue of their higher thickening ability and concentration dependence of viscosity in a brine environment and often higher retention of viscosity in the presence of inorganic electrolytes. Of course, viscosities of polymer solutions containing inorganic electrolytes are a function of such factors as polymer structure, molecular weight, concentration, amount of alkyl (etheroxy) acrylate, etc.

The present invention is distinct from the acrylic acid salt and nonionic surfactant acrylates because different comonomers (i.e. acrylamide vs. salts of acrylic acid) and aqueous, rather than hydrocarbon emulsion polymerization methods are used. Moreover, the present copolymers are prepared by a process where neutralisation is not required.

Acrylic acid-based polymers are to be avoided because of the known susceptibility of acrylic acid (and its salts) to precipitation by polyvalent cations (e.g., $Ca^{++}$); the latter species are often found in geological formations. (F. J. Glaris in "Water Soluble Resins 2nd Ed", R. L. Davidson and M. Sittig, Eds., Rheinhold, NY, p. 168).

The present invention concerns a novel class of acrylamide copolymers containing alkyl poly(etheroxy) acrylate groups. These copolymers are water soluble and many exhibit salt insensitive aqueous viscosification. The mechanism of solution viscosity enhancement is different from that found in the prior art systems based on polyacrylamide and hydrolyzed polyacrylamide. In the compositions of the present invention, the presence of a small amount of hydrophobic or water insoluble alkyl group on the surfactant comonomer is believed to result in intermolecular aggregation or interaction in solution. This aggregation results in enhanced viscosity relative to a noninteracting polymer such as polyacrylamide. Furthermore, the presence of ethylene oxide groups on the surfactant comonomer can be used to adjust polymer solubility and influence viscosity. The relative salt insensitivity of the solution viscosity of these novel copolymers distinguishes them from viscosifiers based on charge repulsion such as hydrolyzed polyacrylamide.

The present invention relates to unique and novel water soluble copolymers of acrylamide and alkyl poly(etheroxy)acrylate and a process for preparing these copolymers. These polymers are prepared by a free radical copolymerization process, and this may comprise adding the acrylamide monomer and alkyl poly(etheroxy)acrylate monomer to deoxygenated water under a nitrogen purge; heating the polymerization solution to a temperature sufficient to activate the ininitiator, e.g. at least 50°C, adding free radical initiator to the polymerization solution to initiate polymerization; polymerizing the acrylamide monomer and alkyl poly(etheroxy)acrylate monomer for a sufficient time and at a sufficient temperature to form the water soluble copolymer of acrylamide and alkyl poly(etheroxy)acrylate; and recovering the formed water soluble copolymer from the polymerization solution. Many of these water soluble copolymers of acrylamide and alkyl poly(etheroxy)acrylate are excellent viscosification agents in salt water.

The copolymers of the invention are effective drag reduction agents for aqueous liquids.

The water soluble copolymers of acrylamide and alkyl poly(etheroxy)acrylate of the present invention formed by a free radical copolymerization process in an aqueous medium are useful as viscosifiers in water and in aqueous solutions containing inorganic electrolytes.

Another free radical copolymerization process used to form these water soluble copolymers of acrylamide and alkyl poly(etheroxy)acrylate comprises adding acrylamide monomer to deoxygenated water under a nitrogen atmosphere; adding alkyl poly(etheroxy)acrylate monomer to the solution of water and acrylamide monomer to form the polymerization solution; heating the polymerization solution to a sufficient temperature to activate the initiator, e.g. at least 50°C; adding free radical initiator to the polymerization solution to cause initiation of the copolymerization of the acrylamide monomer and the alkyl poly(etheroxy)acrylate monomer; copolymerizing the acrylamide monomer and alkyl poly(etheroxy)acrylate monomer at a temperature of at least 50°C for at least 2 hours, more preferably at least 20°C, to form the water soluble copolymer of acrylamide and alkyl poly(etheroxy)acrylate; and recovering by precipitation or dialysis of the formed water soluble copolymer of acrylamide and alkyl poly(etheroxy)acrylate from the polymerization solution.

The water soluble copolymers of acrylamide and alkyl poly(etheroxy)acrylate can be represented by the formula:

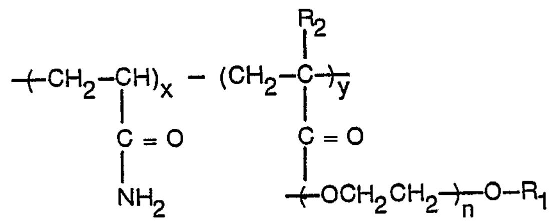

wherein $R_1$ is a $C_1$ to $C_{20}$ alkyl group, a $C_6$ to $C_{20}$ aryl group or a $C_7$ to $C_{30}$ alkaryl group, preferably $C_{10}$ to $C_{25}$ alkaryl, $R_2$ is hydrogen or a methyl group, n is 1 to 60, more preferably 5 to 50, and most preferably 8 to 45; y is .01 to 5.00 mol.%, more preferably .04 to 3.0, and most preferably .1 to 1.5; and x is 95.00 to 99.99 mole%, more preferably 97.0 to 99.96 and most preferably 99.9 to 98.5. Typical, but nonlimiting examples of preferred $R_1$ groups are methyl, octadecyl, phenyl and nonylphenyl.

The instrinsic viscosity of the water soluble copolymers of acrylamide and alkyl poly(etheroxy)acrylate is 1 to 25, more preferably 2 to 20, and most preferably 3 to 10. The intrinsic viscosity, [η], is related to the viscosity average molecular weight, Mv, by the Mark Houwink relationship: $[\eta] = K\overline{M}_v$.

Suitable alkyl poly(etheroxy) acrylate monomers [abbreviated R—(PEO)—AC] useful in the preparation of the water soluble copolymers of the present invention are methyl, dodecyl, octadecyl phenyl, octylphenyl and nonylphenyl poly(ethoxy) acrylates. In general they may have the formula:

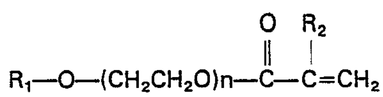

where $R_1 = C_1$ to $C_{20}$ alkyl, $C_6$ to $C_{20}$ aryl or $C_7$ to $C_{30}$ alkaryl and $R_2$ = H or $CH_3$; N = 1—60.

Suitable free radical initiators for the present free radical copolymerisation process include potassium persulphate, 2,2'-azobisobutyronitrole (AIBN), $H_2O_2$, $H_2O_2/Fe$, $H_2O/Ce(IV)$, potassium persulphate and ethanolamine/sodium sulphite. The concentration of the free radical initiator is .01 to 1.0 grams per 100 grams of the acrylamide monomer and alkyl poly(etheroxy)acrylate monomer.

The concentration of the acrylamide monomer and alkyl poly(etheroxy)monomers in the aqueous polymerisation solution is preferably 1 to 20, more preferably 3 to 15, and most preferably 3 to 10 grams of acrylamide monomer and alkyl poly(etheroxy)monomer per 100 grams of water. Copolymerisation of the acrylamide monomer and alkyl poly(etheroxy)acrylate monomer is effected at a temperature preferably of 5 to 80°C, more preferably 20 to 60°C, and most preferably 40 to 60°C for a period of time of .5 to 48 hours, more preferably 2 to 30, and most preferably 4 to 24 hours.

Copolymers of acrylamide and alkyl poly(etheroxy)acrylate are recovered from the polymerisation solution by precipitation with a nonsolvent (e.g. methanol, isopropanol, or acetone), followed by vacuum drying. An alternative recovery technique involves dialysis followed by freeze drying. Alternatively, dialysis can be used. The water soluble copolymers can be either dried by vacuum or by freeze drying means.

In the drawings:

Figure 1 illustrates a plot of reduced viscosity versus concentration for an acrylamide polymer, a hydrolyzed acrylamide polymer and a copolymer of acrylamide and alkyl poly(etheroxy)acrylate.

The following Examples illustrate the present invention.

### Example 1

Polyacrylamide Polymerization

A 500—1000 ml quantity of distilled water was added to a resin flask equipped with a water condenser, thermometer, mechanical stirrer, as well as a nitrogen inlet and outlet. The water was deoxygenated for 15—30 minutes by a nitrogen purge. The acrylamide monomer (AM) (.42—.49 mol), Aldrich, was added and the solution further purged at 50°C with nitrogen for 3/4 to 1 hour. The $K_2S_2O_8$ initiator (.005—.05g) was charged and the polymerization temperature maintained at 50—55°C. The polymerization was run for 18.5—24 hours (conversion 90—100%). Polymers were isolated/purified by precipitation in acetone and vacuum drying. An alternative procedure for isolation and purification involved dialysis of a diluted polymer solution followed by freeze drying. Table I describes homopolymerization according to the method of this Example.

TABLE I

Homopolymers of Polyacrylamide (PAM)

| Sample No | AM mol | $H_2O$ ml | $K_2S_2O_8$ gm |
|---|---|---|---|
| 9020—74CG | .42 | 500 | .05 |
| 9020—3P | .42 | 1000 | .01 |
| 9595—53P | .42 | 1000 | .005 |
| 9020—117P | .49 | 500 | .01 |

Example 2

Copolymerization of Acrylamide with Alkyl Poly(etheroxy)acrylates (R-(-PEO-)-AC)

A 500—1000 ml quantity of distilled water was added to a resin flask equipped with a water condenser, thermometer, mechanical stirrer, as well as a nitrogen inlet and outlet. Nitrogen was bubbled through the solution for 15—30 minutes. The acrylamide (AM), Aldrich, monomer (0.21—.42 mol) and alkyl poly(etheroxy)acrylate (R-(-PEO-)-AC) monomers (.42—8.5 × $10^{-3}$ mol) were charged to the flask. The alkyl poly(etheroxy)acrylate monomers used were commercial products of the Monomer-Polymer and Dajac Laboratories, e.g. 8615, 8616, 8617, and were used as received. The solution was heated by an oil bath under nitrogen purge at 50°C for 1 hour. After this period of time, the $K_2S_2O_8$ initiator (0.005—.1g) was added and the temperature maintained at 50—55°C under nitrogen for 18.5—24 hours (Conversion 70—95%). Polymers were purified by precipitation of dialysis techniques. Polymers were dried by vacuum or freeze drying. Table II describes copolymerization products prepared according to this Example. The surfactant acrylate content is indicated as mole% of monomer charge.

TABLE II

Copolymerization of Acrylamide and Alkyl Poly(etheroxy) Acrylates

| Sample No | AM mol | Comonomer R— | Type (PEO)x | Comonomer Mol × $10^3$ | Mole% Comonomer | $H_2O$ ml | $K_2S_2O_8$ g |
|---|---|---|---|---|---|---|---|
| 9595—9P | .42 | $C_9H_{19}$ Ph | 40 | .42 | 0.1 | 500 | .01 |
| 9020—26DY | .42 | $C_9H_{19}$ Ph | 40 | 1.2 | 0.3 | 500 | .01 |
| 9020—121—DFD | .42 | $C_9H_{19}$ Ph | 40 | 1.2 | 0.3 | 500 | .01 |
| 9595—54P | .42 | $C_9H_{19}$ Ph | 40 | 1.2 | 0.3 | 1000 | .005 |
| 9020—33DM | .21 | $C_9H_{19}$ Ph | 40 | 1.2 | 0.6 | 500 | .1 |
| 9595—10P | .42 | $C_9H_{19}$ Ph | 40 | 8.5 | 2.0 | 500 | .01 |
| 9020—136 | .21 | $C_9H_{19}$ Ph | 10 | 1.6 | 0.8 | 500 | .005 |
| 9020—138P | .21 | $C_9H_{19}$ Ph | 10 | 3.2 | 1.5 | 500 | .005 |
| 9020—61 | .21 | $C_9H_{19}$ Ph | 10 | 3.2 | 1.5 | 500 | .05 |
| 9020—139P | .21 | $C_9H_{19}$ Ph | 10 | 6.9 | 3.2 | 500 | .005 |
| 9595—3P | .42 | $CH_3$ | 40 | 1.2 | 0.3 | 500 | .01 |
| 9020—154P | .21 | Ph | 30 | 1.2 | 0.3 | 500 | .01 |
| 9595—103 | .42 | $C_{18}H_{35}$ | 35 | 1.3 | 0.3 | 500 | .01 |
| 9595—153P | .42 | Ph | 1 | 1.3 | 0.3 | 500 | .01 |

Example 3

Polymer Solution Properties

The polymers were weighed (±0.001g) into flasks; the solvents (double distilled $H_2O$, salt added where necessary) were weighed into the same flask. The polymers were allowed to agitate on a magnetic stirrer for a minimum of 48 hours or until complete solubility was achieved, as determined by visual observation. In the event a polymer solution displayed "gel" particles after a lengthy dissolution period, the solution was centrifuged at 2000 rpm for two hours to separate the "gel" from the soluble portion. A few of the more viscous solutions were subjected to an additional filtration through a 150 mesh stainless steel screen to remove any microgel particles. An aliquot was then removed and vacuum dried at 110°C to determine solubility and polymer concentration for all polymers. When polymer solubility did not approximate to 90%, polymer concentrations were corrected.

A portion of the stock polymer solution was removed and to a known weight of solution was added 2 wt.% NaCl. Dilutions of each polymer stock solution were prepared and viscosity obtained after waiting a minimum of one hour after dilution to achieve equilibrium.

The reduced viscosity or viscosity number

$$\left(\frac{\eta_s - \eta_o}{\eta_o c}\right)$$

where $\eta_s$ is the polymer solution viscosity (centipoise), $\eta_o$ is the solvent viscosity and c is the polymer concentration was used to compare various polymer solutions at different concentrations. Polymer concentration began at 3000 ppm to establish an initial baseline prior to dilution. Viscosity measurements were conducted at 25°C on a Contraves Viscometer at 1.285 $sec^{-1}$. Typical data are shown in Table III. Intrinsic viscosity, [η], defined as the limit of reduced viscosity as polymer concentration goes to zero, is given in this table as dl/g. Viscosity η at shear rate at $1.2g^{-1}$ has the units of cps. ($10^{-3}Nsm^{-2}$)

TABLE III

Polymer Solution Properties

| Sample No | Homo- or Copolymer | Comonomer Type R | Comonomer Type ‒(PEO)‒ | Charged Mole% Comonomer | Conc. of Polymer ppm | [η] 2% NaCl | NaCl Conc. %w/w | η at $1.28s^{-1}$ | % Retention | Comments |
|---|---|---|---|---|---|---|---|---|---|---|
| 9020—74CG | Homo- (PAM) | — | — | — | 3000 | 1.6 | 0.0<br>2.0 | 3.0<br>3.0 | —<br>100 | Low MW |
| Polysciences | Homo- (PAM) | — | — | — | 3000 | | 0.0<br>2.0 | 6.6<br>4.0 | —<br>60 | |
| 9020—3P | Homo- (PAM) | — | — | — | 3000 | | 0.0<br>2.0 | 14.0<br>8.0 | —<br>57 | |
| 9020—117P | Homo- (PAM) | — | — | — | 3000 | 9.0 | 0.0<br>2.0 | 18.0<br>7.0 | —<br>39 | High MW |
| 9595—53P | Homo- (PAM) | — | — | — | 3000 | 10 | 0.0<br>2.0 | —<br>8.4 | —<br>— | High MW |
| Dow Pusher[1] 700 | Co- (HPAM) | $CH_2=CH-C(=O)-O-Na$[1] | | 35[1] | 3000 | 24 | 0.0<br>2.0 | 1250<br>50 | —<br>4 | High MW + Ionic |
| 9595—9P | Co- | $C_9H_{19}$ Ph | 40 | 0.1 | 3000 | 5.6 | 0.0<br>2.0 | 6.9<br>7.5 | —<br>109 | High MW; low [comonomer] |
| 9020—121DFD | Co- | $C_9H_{19}$ Ph | 40 | 0.3 | 3000 | 3.0 | 0.0<br>2.0 | 136<br>98 | —<br>72 | High MW; higher [comonomer] |
| 9020—26DY | Co- | $C_9H_{19}$ Ph | 40 | 0.3 | 3000 | 4.0 | 0.0<br>2.0 | 65<br>75 | —<br>115 | |
| 9595—54P | Co- | $C_9H_{19}$ Ph | 40 | 0.3 | 3000 | | 0.0<br>2.0 | —<br>233 | —<br>— | High MW; higher [comonomer] |

(1) Dow Pusher 700 is a commercial copolymer of acrylamide and sodium acrylate (35%).

TABLE III continued

Polymer Solution Properties

| Sample No | Homo- or Copolymer | Comonomer Type R | $-(PEO)-$ | Charged Mole% Comonomer | Conc. of Polymer ppm | [η] 2% NaCl | NaCl Conc. %w/w | η at $1.28s^{-1}$ | % Retention | Comments |
|---|---|---|---|---|---|---|---|---|---|---|
| 9020—33DY | Co- | $C_9H_{19}Ph$ | 40 | 0.6 | 3000 | 2.1 | 0.0<br>2.0 | 8.0<br>6.0 | —<br>75 | Low MW; higher [comonomer] |
| 9595—10P | Co- | $C_9H_{19}Ph$ | 40 | 2.0 | 2000 | 6.2 | 0.0<br>2.0 | 36<br>2.0 | —<br>5.5 | High MW; High [comonomer]; Low [polymer] |
| 9020—61 | Co- | $C_9H_{19}Ph$ | 10 | 1.5 | 3000 | 7.5 | 0.0<br>2.0 | 8.0<br>6.0 | —<br>75 | Moderate MW; Moderate [comonomer] |
| 9020—138P | Co- | $C_9H_{19}Ph$ | 10 | 1.5 | 3000 | | 0.0<br>2.0 | 35<br>5 | —<br>14 | High MW; Moderate [comonomer] |
| 9020—139P | Co- | $C_9H_{19}Ph$ | 10 | 3.2 | 1500 | 1.6 | 0.0<br>2.0 | 21<br>1.6 | —<br>7.6 | High [comonomer]; Low [polymer]; low MW |
| 9595—3P | Co- | $CH_3$ | 40 | 0.3 | 3000 | | 0.0<br>2.0 | 5.0<br>5.0 | —<br>100 | |
| 9595—154P | Co- | Ph | 40 | 0.3 | 3000 | 6.0 | 0.0<br>2.0 | 4.0<br>4.0 | —<br>100 | |
| 9595—103 | Co- | $C_{18}H_{35}$ | 35 | 0.3 | 3000 | 8.0 | 0.0<br>2.0 | 7.2<br>5.6 | —<br>77 | |
| 9595—153P | Co- | Ph | 1 | 0.3 | 3000 | 8.0 | 0.0<br>2.0 | 9.0<br>8.0 | —<br>89 | |

## Example 4

Polymer Solution Properties: Present Copolymers vs. PAM

Table III clearly shows that the present copolymers, especially the copolymers of nonylphenoxy poly(etheroxy)acrylates, are more efficient viscosifiers than homopolyacrylamide (PAM). Particular attention is called to polymers prepared at similar initiator and monomer charges because the ratio of $[m]/\sqrt{[I]}$ is related to polymer molecular weight, ceteris paribus. For example, the viscosity of copolymer 9595—54P can be compared with that of homopolymer 9595—53P. The viscosities of 3000 ppm solutions at 1.28 $sec^{-1}$ shear rate are 233 cps (0.233 $NSm^{-2}$) and 8.4 cps (0.0084 $NSm^{-2}$) respectively. This viscosity increase (approximately 30-fold) is associated with the addition of only .3 mole% of the acrylate comonomer to acrylamide.

## Example 5

Polymer Solution Properties — Salt Tolerance

Table III also shows the excellent tolerance of some of the present copolymers to a brine (2% NaCl) environment. Attention is called to column (% η retention) for the present copolymers compared with PAM and HPAM (a copolymer of acrylamide and sodium acrylate). In the preferred range of this invention (at low alkyl poly(etheroxy)acrylate R-(-PEO-)-AC content and/or low polymer concentrations), the present copolymers are substantially more resistant to brine than HPAM (%η retention = 72—115% vs. 4%). At high R-(-PEO-)-AC contents (e.g., Sample 959510P with 2 mol% comonomer), the solubility limit of the polymer is approached and such comparisons are inappropriate. Of course, the solubility and degree of salt tolerance varies for each copolymer depending upon many factors, e.g., the level of R-(-PEO-)-AC, the length of PEO chain, the nature of R, the molecular weight of the polymer, the concentration of the polymer, etc.

## Example 6

Polymer Solution Properties

Brine Thickening Efficiency — Copolymers of the invention vs. PAM and HPAM

Figure 1 illustrates the advantages of the compositions of the present invention compared with PAM and HPAM of the prior art. This figure presents reduced viscosity-concentration plots for the R-(-PEO-)-AC copolymers (.3 mole%) compared with PAM and HPAM (Dow Pusher 700). Clearly, the present copolymers are more efficient brine viscosifiers than PAM. In fact, the present copolymers even surpass the viscosity of the commercial copolymer HPAM above certain concentrations. This result is all the more noteworthy in view of the fact that the molecular weights of the disclosed copolymers are likely to be substantially less than that of HPAM, based upon intrinsic viscosity measurements. The [η]2% NaCl of the present copolymers (e.g., 9020—121DFD and 9020—26DY) are 3—4 while that of HPAM is 24 (Table III).

## Example 7

Copolymerization of Acrylamide with Alkyl Poly(Etheroxy) Acrylates R-(-PEO-)-AC

A 500 ml quantity of distilled water was added to a 1000 ml resin flask equipped with a water condenser, thermometer, mechanical stirrer, as well as a nitrogen inlet and outlet. Nitrogen was bubbled through the solution for 15 to 30 minutes. The acrylamide (AM) monomer (0.21 to 41 mol) and alkyl poly(etheroxy)acrylate R-(-PEO-)-AC monomer (1.2—8.5 × $10^{-3}$ mol) were charged to the flask. The solution was heated by an oil bath under nitrogen purge at 50°C for 1 hour. After this period of time, the $K_2S_2O_8$ initiator (.01) was added and the temperature maintained at 50 to 55°C under nitrogen for about 18.5 to 19 hours (Conversion 70 to 95%). Polymers were purified by precipitation or dialysis techniques. Polymers were dried by vacuum or freeze drying. Table IV describes copolymers prepared according to this Example. The surfactant acrylate content is indicated as mole% of monomer charge.

TABLE IV

Copolymers of Acrylamide and Alkyl Poly(etheroxy)acrylates

| Polymer | Polymer Type | R- | Type (PEO) | HLB(1) | AM(2) Mol | Comonomer Mol × $10^{-3}$ | Mole% Comonomer | $H_2O$ MT | $H_2S_2O_8$ g | [η]2% NaCl |
|---|---|---|---|---|---|---|---|---|---|---|
| 9595—50P | PAM-CO-R$-(PEO)_\eta-$Ac | $C_9H_{19}Ph$ | 40 | 17.8 | .42 | 1.23 | .3 | 500 | .01 | 3.3 |
| 9595—10P | PAM-CO-R$-(PEO)_\eta-$Ac | $C_9H_{19}Ph$ | 40 | 17.8 | .42 | 8.5 | 2.0 | 500 | .01 | 6.2 |
| 9595—60 DFD | PAM-CO-R$-(PEO)_\eta-$Ac | $C_9H_{19}Ph$ | 10 | 13.2 | .21 | 6.9 | 3.2 | 500 | .05 | 3.4 |

(1) HBL = Hydrophile-Lipophile Balance of the Surfactant
(2) AM = Acrylamide.

Example 8

Drag Reduction of Novel Copolymers

Drag reduction effectiveness was evaluated by flowing polymer/distilled water solutions through a 2.13 mm inside diameter stainless steel tube and measuring the resulting frictional pressure drop. Flows were generated by first loading a bladder accumulator with a previously dissolved polymer/distilled water solution and then discharging the solution through the tube test section. The bladder accumulator used (Greer-Olaer Model 30A—2 1/2) is a 10l pressure vessel which contains an inflatable rubber bladder, a port for loading and discharging gas from the inside of the bladder and a port for loading and discharging liquid solutions from the space between the bladder and the interior vessel walls. To load the vessel with liquid, the bladder was first expanded with nitrogen gas such that the bladder filled the inside of the vessel. The liquid solution was then siphoned into the vessel as the bladder was evacuated. Subsequent charging of the vessel with nitrogen gas produced a flow of liquid which was directed to the 2.13 mm diameter tube. Pressure drops were measured across a 48 cm straight segment of the tube with a pair of flush mounted tube wall pressure taps and a differential pressure transmitter. Flow rates were measured by weighing samples of the effluent liquid collected over measured time periods.

Flow rates in the drag reduction experiments ranged from about 8 to 20 g/s; these correspond to solvent Reynolds numbers from about 5000 to 13,000 (solvent Reynolds number = mean flow velocity x tube diameter ÷ solvent kinematic viscosity). Drag reduction was measured by comparing pressure drops of the polymer/distilled water solutions with pressure drops of the distilled water solvent at equal flow rates. Results were expressed as percent drag reduction which is defined as follows:

$$\text{Percent Drag Reduction} = \frac{\text{Pressure Drop (Solvent)} - \text{Pressure Drop (Solution)}}{\text{Pressure Drop (Solvent)}} \times 100$$

Typical drag reduction results from experiments with several novel acrylamide copolymer solutions are given in Table V. Significant drag reduction was observed for all listed solutions.

TABLE V

Drag Reduction Data

| Sample | Polymer | Concentration (WPPM) | Solvent Reynolds Number | Drag Reduction (%) |
|---|---|---|---|---|
| 1 | 9595—60DFD | 63 | 8300 | 16.7 |
| 2 | 9595—10P | 89 | 7700 | 26.1 |
| 3 | 9595—50P | 89 | 3200 | 61.5 |
| 4 | 9495—50 | 25 | 8300 | 54.7 |

**Claims**

1. A water soluble copolymer having the formula:

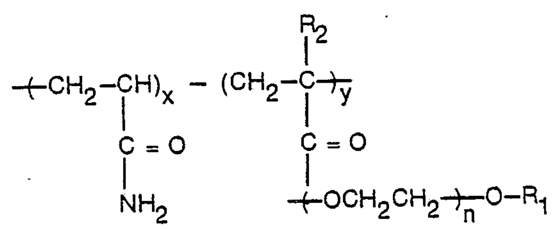

wherein $R_1$ is a $C_1$ to $C_{20}$ alkyl group, a $C_6$ to $C_{20}$ aryl group or a $C_7$ to $C_{30}$ alkaryl group; $R_2$ is hydrogen or a methyl group, n is 1 to 60; y is 0.01 to 5.00 mole%, and x is 95.00 to 99.99 mole%.

2. A copolymer according to claim 1 wherein $R_1$ is an alkaryl group having 10 to 25 carbon atoms.

3. A copolymer according to either of claims 1 and 2 wherein n is 5 to 50, y is 0.04 mole% to 3.0 mole%; and x is 97.00 to 99.96 mole%.

4. The use as a drag reduction agent for aqueous solutions and brine solution of the copolymer according to any one of the preceding claims.

5. A free radical copolymerisation process for the formation of a water soluble copolymer of acrylamide and alkyl poly(etheroxy)acrylate according to claim 1 which comprises the steps of:

(a) forming an aqueous reaction solution from acrylamide monomer, deoxygenated water under a nitrogen atmosphere and alkyl poly(etheroxy)acrylate;

(b) heating said reaction solution to a temperature sufficient to activate the initiator;

(c) adding sufficient free radical initiator to said reaction solution to initiate copolymerisation of said acrylamide monomer and said alkyl poly(etheroxy)acrylate monomer;

(d) polymerising said acrylamide monomer and said alkyl poly(etheroxy)acrylate monomer in said reaction solution at a temperature of at least 5°C for at least 2 hours; and

(e) recovering said copolymer from said reaction solution.

6. A free radical copolymerisation process according to claim 5 wherein n is 1 to 60, y is 0.04 to 3.0 mole% and x is about 97.0 to about 99.0 mole%.

7. A free radical copolymerisation process according to either of claims 5 and 6 wherein said reaction solution is maintained at a temperature of 5 to 80°C for 0.5 to 48 hours.

8. A free radical copolymerisation process according to any one of claims 5 to 7 wherein said free radical initiator is selected from AIBN, $H_2O_2$, $H_2O_2$/Fe, $H_2O_2$/Ce (IV), and potassium persulphate.

## Patentansprüche

1. Wasserlösliches Copolymer der Formel

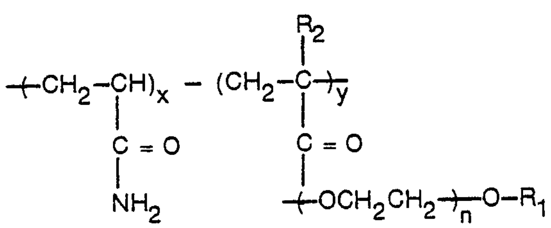

in der $R_1$ eine $C_1$—$C_{20}$-Alkylgruppe, eine $C_6$—$C_{20}$-Arylgruppe oder eine $C_7$—$C_{30}$-Alkarylgruppe ist, $R_2$ Wasserstoff oder eine Methylgruppe ist, n 1 bis 60 ist, y 0,01 bis 5,00 Mol% ist und x 95 bis 99,99 Mol% ist.

2. Copolymer nach Anspruch 1, dadurch gekennzeichnet, daß $R_1$ eine Alkarylgruppe mit 10 bis 25 Kohlenstoffatomen ist.

3. Copolymer nach Anspruch 1 oder 2, dadurch gekennzeichnet, daß n 5 bis 50 ist, y 0,04 Mol% bis 3,0 Mol% ist und x 97,00 bis 99,96 Mol% ist.

4. Verwendung des Copolymeren gemäß einem der vorangehenden Ansprüche als Strömungswiderstandsveringerungsmittel für wässrige Lösungen und Sole.

5. Freiradikalisches Copolymerisationsverfahren zur Bildung eines wasserlöslichen Copolymeren aus Acrylamid und Alkylpoly(etheroxy)acrylat nach Anspruch 1, dadurch gekennzeichnet, daß

(a) eine wässrige Reaktionslösung aus Acrylamidmonomer, von Sauerstoff befreitem Wasser unter einer Stickstoffatmosphäre und Alkylpoly(etheroxy)acrylat hergestellt wird,

(b) diese Reaktionslösung auf eine ausreichende Temperatur erwärmt wird, um den Initiator zu aktivieren,

(c) ausreichend freiradikalischer Initiator zu dieser Reaktionslösung gegeben wird, um die Copolymerisation des Acrylamidmonomeren und des Alkylpoly(etheroxy)acrylatmonomeren zu initiieren,

(d) das Acrylamidmonomer und das Alkylpoly(etheroxy)acrylatmonomer in der Reaktionslösung bei einer Temperatur von mindestens 5°C für mindestens 2 Stunden polymerisiert werden und

(e) das Copolymer aus der Reaktionslösung gewonnen wird.

6. Freiradikalisches Copolymerisationsverfahren nach Anspruch 5, dadurch gekennzeichnet, daß n 1 bis 60 ist, y 0,04 bis 3,0 Mol% ist und x etwa 97,0 bis etwa 99,0 Mol% ist.

7. Freiradikalisches Copolymerisationsverfahren nach Anspruch 5 oder 6, dadurch gekennzeichnet, daß die Reaktionslösung 0,5 bis 48 Stunden auf einer Temperatur von 5 bis 80°C gehalten wird.

8. Freiradikalisches Copolymerisationsverfahren nach einem der Ansprüche 5 bis 7, dadurch gekennzeichnet, daß der freiradikalische Initiator ausgewählt ist aus AIBN, $H_2O_2$, $H_2O_2$/Fe, $H_2O_2$/Ce (IV) und Kaliumpersulfat.

**Revendications**

1. Copolymère soluble dans l'eau ayant la formule

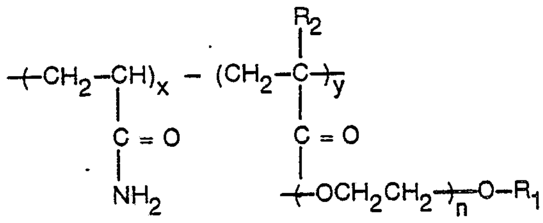

dans laquelle $R_1$ est un groupe alkyle en $C_1$ à $C_{20}$, un groupe aryle en $C_6$ à $C_{20}$ ou un groupe alcaryle en $C_7$ à $C_{30}$; $R_2$ est un hydrogène ou un groupe méthyle, n vaut 1 à 60; y vaut de 0,01 à 5,00 % molaire et x vaut de 95,00 à 99,99% molaire.

2. Copolymère selon la revendication 1, dans lequel $R_1$ est un groupe alcaryle ayant de 10 à 25 atomes de carbone.

3. Copolymère selon l'une ou l'autre des revendications 1 et 2, dans lequel n vaut de 5 à 50, y vaut de 0,04% molaire à 3,0% molaire et x vaut de 97,00 à 99,96% molaire.

4. Utilisation, comme agent réducteur de poussée pour solutions aqueuses et une solution de saumure, du copolymère selon l'une quelconque des revendications précédentes.

5. Procédé de copolymérisation radicalaire pour la formation d'un copolymère soluble dans l'eau d'acrylamide et de poly(étheroxy) acrylate d'alkyle selon la revendication 1, qui comprend les étapes consistant

(a) à former une solution réactionnelle aqueuse à partir d'acrylamide monomère, d'eau désoxygénée sous atmosphère d'azote et de poly(étheroxy)acrylate d'alkyle;

(b) à chauffer ladite solution réactionnelle à une température suffisante pour activer l'initiateur;

(c) à ajouter à ladite solution réactionnelle une quantité de l'initiateur radicalaire suffisante pour amorcer la copolymérisation dudit acrylamide monomère et dudit poly(étheroxy)acrylate d'alkyle monomère;

(d) à polymériser ledit acrylamide monomère et ledit poly(étheroxy)acrylate d'alkyle monomère dans ladite solution réactionnelle à une température d'au moins 5°C pendant au moins 2 heures; et

(e) à récupérer ledit copolymère de ladite solution réactionnelle.

6. Procédé de copolymérisation radicalaire selon la revendication 5, dans lequel n vaut de 1 à 60, y vaut de 0,04 à 3,0% molaire et x vaut d'environ 97,0 à environ 99,0% molaire.

7. Procédé de copolymérisation radicalaire selon l'une ou l'autre des revendications 5 et 6, dans lequel ladite solution réactionnelle est maintenue à une température de 5 à 80°C pendant 0,5 à 48 heures.

8. Procédé de copolymérisation radicalaire selon l'une quelconque des revendications 5 à 7, dans lequel ledit initiateur radicalaire est choisi entre AIBN, $H_2O_2$, $H_2O_2$/Fe $H_2O_2$/(Ce(IV) et le persulfate de potassium.

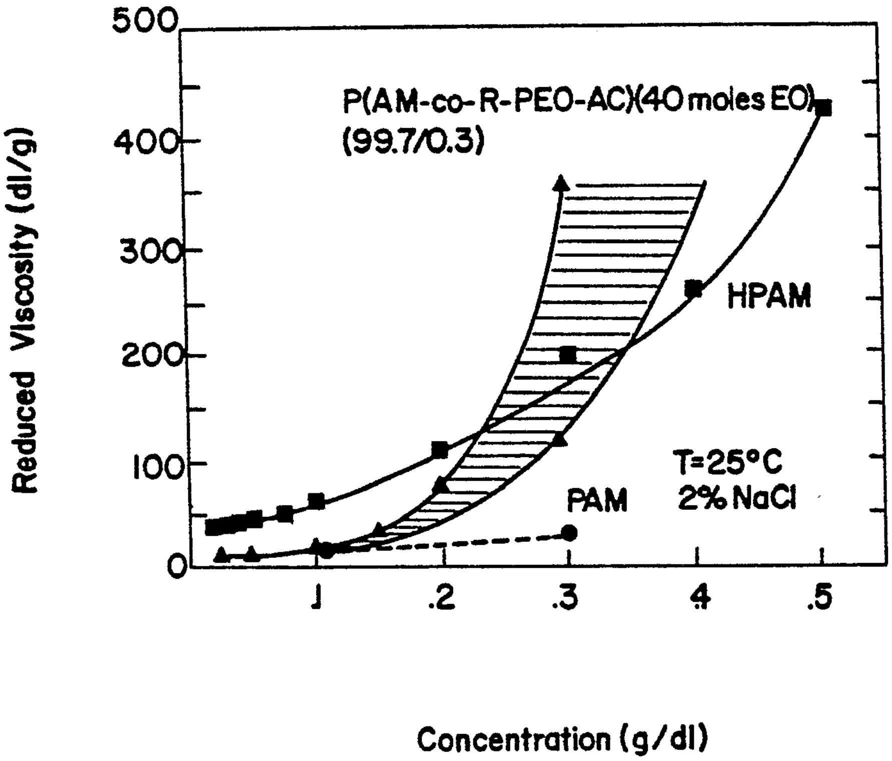
500
400
300
200
100
0
Reduced Viscosity (dl/g)
P(AM-co-R-PEO-AC)(40 moles EO)
(99.7/0.3)
HPAM
T=25°C
2% NaCl
PAM
.1
.2
.3
.4
.5
Concentration (g/dl)